# EUROPÄISCHE PATENTSCHRIFT

(11) **EP 2 371 190 B1**
(45) Veröffentlichungstag und Bekanntmachung des Hinweises auf die Patenterteilung: **01.07.2015**
(21) Anmeldenummer: 11002603.6
(22) Anmeldetag: 30.03.2011
(51) Int. Cl.: A01B 33/08, A01B 49/02

(54) **Bodenbearbeitungsgerät, insbesondere Kreiselegge mit separaten Elektromotoren**
Soil cultivation device, in particular power harrow with separate electric motors
Appareil de traitement de sol, notamment herse rotative dotée de moteurs électriques séparés

(30) Priorität: 30.03.2010 DE 102010013407
(43) Veröffentlichungstag der Anmeldung: 05.10.2011
(73) Patentinhaber: Lemken GmbH & Co. KG, 46519 Alpen (DE)
(72) Erfinder: Gebbeken, Martin, 46519 Alpen (DE); Werries, Dieter, 46519 Alpen (DE); Paeßens, Christian, 47665 Issum (DE); Lukas, Thomas, 48683 Ahaus Wülfen (DE); Geraats, Marcel, 41334 Nettetal (DE); Berendsen, Mark, 7044 AJ Lengel (NL)
(74) Vertreter: Schulte & Schulte

(56) Entgegenhaltungen:
- WO-A1-92/01363
- DE-A1- 2 805 932
- DE-A1- 10 010 819
- DE-C- 834 045
- FR-A1- 2 183 571

## Beschreibung

Die Erfindung betrifft ein Bodenbearbeitungsgerät gemäß dem Oberbegriff des Patentanspruches 1.

Aus der FR 2 183 571 ist ein Bodenbearbeitungsgerät mit rotierbaren Werkzeugen bekannt, die durch oberhalb positionierte Motoren angetrieben werden. Vergleichbar ist die DE-PS 834 045 mit Elektromotoren, welche die Pflugscheiben antreiben, die mittels Werkzeugträgern so an dem Pflugrahmen angeordnet sind, dass die Pflugscheiben in beliebige Arbeitsstellungen gebracht werden können. Die WO 92/01363 zeigt ein Bodenbearbeitungsgerät mit einer Mehrzahl von rotierenden Werkzeugen, zu deren Antrieb an den äußeren Enden des Rahmen positionierte Motoren dienen. Ein Bodenbearbeitungsgerät gemäß Oberbegriff ist außerdem mittelbar der deutschen Offenlegungsschrift DE 100 10 819 A1 zu entnehmen. Der Gegenstand dieser Patentanmeldung ist ein Traktor mit eigener Bordelektronik, Bordcomputer und Stromsteckdose, bei dem die an der Stromsteckdose anstehende Spannung so geregelt werden kann, dass bei einer Kreiselegge mit einem Elektromotor für den Antrieb der Werkzeugkreisel die Drehzahl der Werkzeugkreisel den Gegebenheiten angepasst werden kann. Diese Patentanmeldung lehrt, dass für eine Kreiselegge bzw. für eine klappbare Kreiselegge kein aufwendiger Antriebsstrang mit Gelenkwellen benötigt wird. Vielmehr können die bei klappbaren Kreiseleggen üblichen Kreiseleggenhälften jeweils über einen Elektromotor angetrieben werden. Bei einer Kreiselegge, die mit dem vorgeschlagenen Traktor eingesetzt werden kann, wird nur ein Werkzeugkreisel vom Elektromotor angetrieben und das Antriebsmoment über Zahnräder auch auf die jeweils benachbarten Zahnräder und Werkzeugkreisel übertragen. Nachteilig ist hier, dass die Zahnräder sehr stabil ausgelegt werden müssen, da sie das Antriebsmoment für mehrere Werkzeugkreisel übertragen müssen. Bei einer 4 m breiten Kreiselegge muss das erste Zahnrad im Antriebsstrang fast die 9-fache Stabilität aufweisen wie eigentlich erforderlich.

Aufgabe der Erfindung ist es, eine Kreiselegge zu schaffen, bei der keine Überdimensionierung von Bauteilen wie Zahnräder und Zinken erforderlich wird, bei der der Arbeitseffekt individuell einstellbar ist, bei der der Leistungsbedarf äußert gering ist.

Die Aufgabe der Erfindung wird durch die Merkmale des kennzeichnenden Teils des Patentanspruches 1 gelöst.

Dadurch dass jeder Werkzeugkreisel über einen separaten Elektromotor angetrieben wird, kann neben dem üblichen Antriebsstrang auch auf die üblichen Zahnräder verzichtet werden, über die der Antrieb von Werkzeugkreisel zu Werkzeugkreisel erfolgt. Jeder Werkzeugkreisel mit Elektromotor braucht nur für die individuellen Belastungen ausgelegt zu sein. Auf zusätzliche Antriebselemente kann verzichtet werden.

Erfindungsgemäß ist weiter vorgesehen, dass der Abstand der benachbarten Antriebswellen zueinander größer ist als der Durchmesser der Umlaufbahn der Zinken der drehbaren Werkzeugkreisel. Durch diese Maßnahme wird sichergestellt, dass jeder Werkzeugkreisel mit seinen Zinken unabhängig vom benachbarten Werkzeugkreisel mit Zinken arbeiten kann. Die Drehgeschwindigkeit braucht nicht synchron zu sein, die einzelnen Werkzeugkreisel können mit unterschiedlichen Drehzahlen betrieben werden.

Mit Blick auf den Antrieb ist daran gedacht, dass die Stromversorgung der Elektromotoren über einen Generator erfolgt, der vorzugsweise dem Traktor oder dem Bodenbearbeitungsgerät zugeordnet ist. Der Generator kann so direkt vom Traktormotor angetrieben werden, aber auch Bestandteil eines Bodenbearbeitungsgerätes mit einer Gelenkwelle sein, die die Antriebsleistung des Traktormotors auf den Generator überträgt.

Zusätzlich wird vorgeschlagen, dass zwischen dem Generator und den Elektromotoren mindestens ein Antriebsregler zwischengeschaltet ist und dass über eine Steuerung die Motordrehzahl so geregelt wird, dass die Drehzahl der Werkzeugkreisel den eingestellten, programmierten oder den über ein digitales Bestimmungssystem der Position, z.B. ein GPS Empfänger, empfangenen Vorgaben entspricht. Abhängig von diesen Vorgaben wird so die Drehzahl der Werkzeugkreisel erhöht oder reduziert, so wie es die vorliegenden Gegebenheiten erfordern. Diese Vorgaben können von einer Flächendatei stammen, sie können auch einprogrammiert sein oder einfach manuell umgesetzt werden.

Es ist außerdem eine Vorrichtung vorgesehen, die die Struktur des bearbeiteten Bodens erfasst und dass über die Steuerung die Drehzahl und auch die Drehrichtung der Werkzeugkreisel so eingestellt werden, dass die gewünschte Struktur des Bodens erreicht wird. Über Kamerasysteme mit entsprechenden Auswertungsprogrammen oder Sensoren, kann so ermittelt werden, ob der Boden zu intensiv oder unzureichend bearbeitet wird. Die Drehzahl der Werkzeugkreisel mit den Zinken kann dann so verändert werden, dass die gewünschte Krümelstruktur erzielt wird. Werden dabei zum Beispiel Zinken eingesetzt, die auf Griff gestellt sind oder schleppend angeordnet sind, kann auch die Umkehr der Drehrichtung der Werkzeugkreisel dazu benutzt werden, die gewünschte Bodenstruktur zu erreichen.

Was den Motor betrifft, ist vorgesehen, dass der jeweilige Elektromotor als Servomotor, Synchronmotor oder Asynchronmotor ausgebildet ist, der hinsichtlich der Drehrichtung reversierbar ist und mit einer Spannung zwischen 380 Volt und 750 Volt versorgt wird. Um einen möglichst effizienten Wirkungsgrad zu erreichen, empfiehlt sich eine Spannung zwischen 380 Volt und 750 Volt, wobei auch höhere Spannungen denkbar sind. Sinnvoll ist es allerdings, den zuvor genannten Spannungsbereich zu nutzen, da diese Technik bereits bei stationären Maschinen gut bewährt eingesetzt wird.

Die Erfindung sieht weiter vor, dass der jeweilige Elektromotor mit einem Freilauf und/oder einer Reversiereinrichtung ausgestattet ist, die bei Erreichen eines vorgegebenen Grenzantriebsmomentes oder einer entsprechend hohen Stromaufnahme des zugehörigen Elektromotors aktivierbar ausgebildet sind. Sollten die Zinken eines Werkzeugkreisels auf ein Hindernis stoßen, kann so zum Schutz vor Beschädigungen des Gerätes, des Werkzeugkreisels oder des Elektromotors der Antrieb abgeschaltet werden. Umgekehrt kann so z.B. auch durch kurzzeitige Drehrichtungsumkehr ein bereits zwischen den Zinken des benachbarten Kreisels eingeklemmter Stein wieder frei gegeben werden.

Weiterhin ist zwischen dem jeweiligen Elektromotor und der Antriebswelle ein Getriebe vorgesehen, das eine Untersetzung oder Übersetzung der Drehzahl des Werkzeugkreisels im Verhältnis zur Drehzahl des Elektromotors bewirkend ausgebildet ist. Zum einen können so Elektromotoren eingesetzt werden, die z.B. mit einer hohen Drehzahl arbeiten und dementsprechend leicht ausgebildet sein können, zum anderen kann die Drehzahl der Werkzeugkreisel auch gering gehalten werden, was zu Energieeinsparungen führt, wenn die Bodenverhältnisse eine derartige geringe Drehzahl der Werkzeugkreisel zulassen.

Nach einer weiteren vorteilhaften Ausführungsform der Erfindung sind mindestens zwei Werkzeugkreisel mit Elektromotor verschiebbar, versetzbar oder verschwenkbar am Rahmen angeordnet. Diese Ausführungsform gewährleistet, dass der Boden jeweils optimal bearbeitet werden kann. Üblicherweise hinterlässt der Traktor Fahrspuren, die eine intensivere oder zumindest eine andere Bearbeitung des befahrenen Bodens erfordern. Je nach vorhandener Fahrspur können so einzelne Werkzeugkreisel in eine Position gebracht werden, die für eine optimale Lockerung bzw. Egalisierung der Fahrspur ackerbaulich am günstigsten ist. Seitlich verschwenkbare Werkzeugkreisel können so zum Beispiel über Federelemente in Position gehalten werden und bei Auftreffen auf ein Hindernis zusätzlich seitlich ausweichen.

Die Erfindung sieht weiter vor, dass mindestens zwei Werkzeugkreisel über Lenker vertikal schwenkbar und vorzugsweise parallel geführt am Rahmen angeordnet und in der Arbeitstiefe einstellbar ausgebildet sind. Diese Ausbildungsform ermöglicht es, dass die einzelnen Werkzeugkreisel unterschiedlich tief arbeiten können, so wie es für die vorliegenden Bodenverhältnisse optimal ist. Umgekehrt können so auch Werkzeugkreisel hoch geschwenkt und still gesetzt werden bzw. auch nach oben ausweichen, wenn die Zinken eines Werkzeugkreisets gegen ein Bodenhindernis stoßen. Umgekehrt kann auch bei der letzten Überfahrt auf dem Feld, wenn zum Beispiel nur noch ein schmaler Streifen bearbeitet werden muss, verhindert werden, dass benachbartes Land bearbeitet wird, bzw. Bodenstellen doppelt bearbeitet werden. Dadurch wird übermäßiger Zinkenverschleiß verhindert, Teilbreiten der Kreiselegge können so auch bei Bedarf abgeschaltet werden, wie es z.B. bereits bei Drillmaschinen oder Feldspritzen bekannt ist.

Es empfiehlt sich darüber hinaus, dass die Werkzeugkreisel den Anforderungen entsprechend in unterschiedlichen Abständen zueinander und in unterschiedlichen Winkellagen zum Boden angeordnet sind. Diese Maßnahme ermöglicht es, je nach Bedarf, die Arbeitsintensität in Teilbereichen des Gerätes zu erhöhen bzw. durch Schrägstellung der Werkzeugkreisel, den Boden gezielt zu bewegen, z.B. in eine noch nicht absolut eingeebnete Spurrille des Traktors.

Weitere Einzelheiten und Vorteile des Erfindungsgegenstandes ergeben sich aus der nachfolgenden Beschreibung und der zugehörigen Zeichnung. Dargestellt ist eine Kreiselegge mit separat angetriebenen Werkzeugkreiseln.

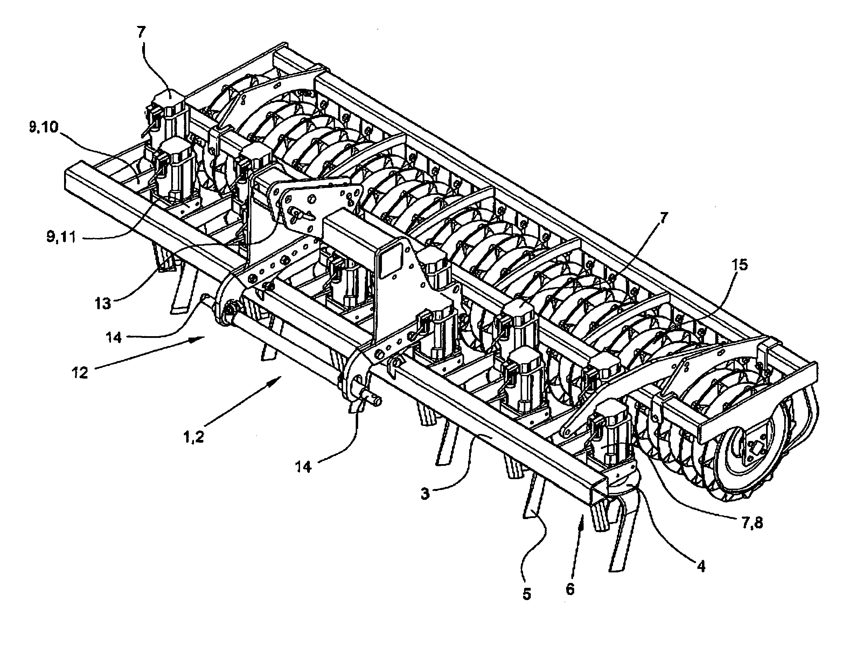

Die Figur zeigt eine Kreiselegge 2 als Bodenbearbeitungsgerät 1, die einen Rahmen 3 aufweist, an dem die Werkzeugkreisel 4 mit ihren Antriebswellen 6 mit den Zinken 5 nebeneinander und hintereinander versetzt angeordnet sind. Oberhalb der Werkzeugkreisel 4 befinden sich die Elektromotoren 7 mit integriertem Getriebe 8. Für die Befestigung der Elektromotoren 7 und Getriebe 8 mit dem Rahmen 3 dienen die Träger 9. Die einzelnen Werkzeugkreisel 4 sind, wie bereits zuvor erwähnt, nebeneinander und hintereinander versetzt angeordnet. Die vorderen Werkzeugkreisel sind über kurze Träger 11 mit dem Rahmen 3 verbunden, die hinteren Werkzeugkreisel über die längeren Träger 10. Die Kreiselegge 2 kann über den Dreipunktturm 12 mit dem Dreipunktgestänge eines Traktors verbunden werden. Dazu dient der obere Anlenkpunkt 13 und die unteren Anlenkpunkte 14. Der Kreiselegge 2 ist auch eine höheneinstellbare Nachlaufwalze 15 nachgeordnet, die den bearbeiteten und gelockerten Boden zusätzlich bearbeitet und rückverfestigt.

## Patentansprüche

1. Kreiselegge (2) mit einem Rahmen (3) und nebeneinander angeordneten drehbaren Werkzeugkreiseln (4) mit Zinken (5), die über Antriebswellen (6) mit dem Rahmen (3) verbunden sind, wobei die drehbaren Werkzeugkreisel (4) über einen Elektromotor angetrieben sind und
jeder Werkzeugkreisel (4) über einen separaten Elektromotor (7) angetrieben wird, wobei der jeweilige Elektromotor (7) oberhalb der Werkzeugkreisel (4) angeordnet ist,
**dadurch gekennzeichnet,**
**dass** eine Vorrichtung vorgesehen ist, die die Struktur des bearbeiteten Bodens erfasst und dass über die Steuerung die Drehzahl und auch die Drehrichtung der Werkzeugkreisel so eingestellt werden, dass die gewünschte Struktur des Bodens erreicht wird.

2. Kreiselegge nach Anspruch 1,
**dadurch gekennzeichnet,**
**dass** der Abstand der benachbarten Antriebswellen (6) zueinander größer ist als der Durchmesser der Umlaufbahn der Zinken (5) der drehbaren Werkzeugkreisel (4).

3. Kreiselegge nach Anspruch 1,
**dadurch gekennzeichnet,**
**dass** die Stromversorgung der Elektromotoren (7) über einen Generator erfolgt, der vorzugsweise dem Traktor oder der Kreiselegge (2) zugeordnet ist.

4. Kreiselegge nach Anspruch 3,
**dadurch gekennzeichnet,**
**dass** zwischen dem Generator und den Elektromotoren (7) mindestens ein Antriebsregler zwischengeschaltet ist und dass über eine Steuerung die Motordrehzahl so geregelt wird, dass die Drehzahl der Werkzeugkreisel (4) den eingestellten, programmierten oder den über ein digitales Bestimmungssystem der Position, z.B. ein GPS Empfänger, empfangenen Vorgaben entspricht.

5. Kreiselegge nach Anspruch 1,
**dadurch gekennzeichnet,**
**dass** der jeweilige Elektromotor (7) als Servomotor, Synchronmotor oder Asynchronmotor ausgebildet ist, der hinsichtlich der Drehrichtung reversierbar ist und mit einer Spannung zwischen 380 Volt und 750 Volt versorgt wird.

6. Kreiselegge nach Anspruch 1,
**dadurch gekennzeichnet,**
**dass** der jeweilige Elektromotor (7) mit einem Freilauf und/oder einer Reversiereinrichtung ausgestattet ist, die bei Erreichen eines vorgegebenen Grenzantriebsmomentes oder einer entsprechend hohen Stromaufnahme des zugehörigen Elektromotors (7) aktivierbar ausgebildet sind.

7. Kreiselegge nach Anspruch 1,
**dadurch gekennzeichnet,**
**dass** zwischen dem jeweiligen Elektromotor (7) und der Antriebswelle (6) ein Getriebe (8) vorgesehen ist, das eine Untersetzung oder Übersetzung der Drehzahl des Werkzeugkreisels (4) im Verhältnis zur Drehzahl des Elektromotors (7) bewirkend ausgebildet ist.

8. Kreiselegge nach Anspruch 1,
**dadurch gekennzeichnet,**
**dass** mindestens zwei Werkzeugkreisel (4) mit Elektromotor (7) verschiebbar, versetzbar oder verschwenkbar am Rahmen (3) angeordnet sind.

9. Kreiselegge nach Anspruch 1,
**dadurch gekennzeichnet,**
**dass** mindestens zwei Werkzeugkreisel (4) über Lenker vertikal schwenkbar und vorzugsweise parallel geführt am Rahmen (3) angeordnet und in der Arbeitstiefe einstellbar ausgebildet sind.

10. Kreiselegge nach Anspruch 1,
**dadurch gekennzeichnet,**
**dass** die Werkzeugkreisel (4) den Anforderungen entsprechend in unterschiedlichen Abständen zueinander und in unterschiedlichen Winkellagen zum Boden angeordnet sind.

## Claims

1. Rotary harrow (2) with a frame (3) and rotatable tool rotors (4) arranged in parallel with tines (5), which are connected to the frame (3) via drive shafts (6), whereby the rotatable tool rotors (4) are driven by an electric motor and each tool rotor (4) is driven by a separate electric motor (7), whereby the respective electric motor (7) is located above the tool rotor (4),
**characterised by** the fact
that a device is provided that records the structure of the tilled soil and that the rotational speed and the direction of rotation of the tool rotors as well are set through the controller so that the desired soil structure is achieved.

2. Rotary harrow in accordance with Claim 1,
***characterised by the fact**
that the distance of the adjacent drive shafts (6) to one another is greater than the diameter of the orbit of the tines (5) of the rotatable tool rotors (4).

3. Rotary harrow in accordance with Claim 1,
**characterised by the fact**
that the power supply for the electric motors (7) is provided via a generator, which is preferably assigned to the tractor or to the rotary harrow (2).

4. Rotary harrow in accordance with Claim 3,
**characterised by** the fact
that at least one drive regulator is interconnected between the generator and the electric motors (7) and that the motor rotational speed is regulated via a controller in such a way that the rotational speed of the tool rotor (4) corresponds to the set or programmed specifications or those received via a digital position determination system, e.g. a GPS receiver.

5. Rotary harrow in accordance with Claim 1,
**characterised by** the fact
that the respective electric motor (7) is designed as a servomotor, a synchronous motor or an asynchronous motor, which can be reversed with regard to the direction of rotation and is supplied with a voltage between 380 Volt and 750 Volt.

6. Rotary harrow in accordance with Claim 1,
**characterised by the fact**
that the respective electric motor (7) is equipped with a freewheel and/or a reversing device, which are designed to be activatable when a given threshold drive torque or a correspondingly high power consumption of the associated electric motor (7) is reached.

7. Rotary harrow in accordance with Claim 1,
**characterised by the fact**
that between the respective electric motor (7) and the drive shaft (6) a transmission (8) is planned that is designed to bring about a gearing down or a gearing up of the rotational speed of the tool rotor (4) in the ratio to the rotational speed of the electric motor (7).

8. Rotary harrow in accordance with Claim 1,
**characterised by the fact**
that at least two tool rotors (4) with electric motor (7) are arranged to be movable, relocatable or swivellable on the frame (3).

9. Rotary harrow in accordance with Claim 1,
**characterised by the fact**
that at least two tool rotors (4) are arranged to swivel vertically via guides and are preferably parallel on the frame (3) and are designed to have an adjustable working depth.

10. Rotary harrow in accordance with Claim 1,
**characterised by the fact**
that the tool rotors (4) are arranged in accordance with the requirements at different distances to one another and at different angles to the ground.

## Revendications

1. Herse rotative (2) avec un cadre (3) et des rotors porte-outils (4) rotatifs disposés les uns à côté des autres avec dents (5), qui sont liés au cadre (3) par l'intermédiaire d'arbres d'entraînement (6), sachant que les rotors porte-outils (4) sont entraînés par un moteur électrique
et que chaque rotor porte-outils (4) est entraîné par un moteur électrique (7) séparé, sachant que chaque moteur électrique (7) est disposé au-dessus du rotor porte-outils (4),
**caractérisée par le fait**
**qu'**un dispositif est prévu, qui saisit la structure du sol travaillé et que le régime et aussi le sens de rotation du rotor porte-outils sont réglés, par l'intermédiaire de la commande, de façon à ce que la structure du sol souhaitée soit atteinte.

2. Herse rotative selon la revendication 1,
**caractérisée par le fait**
**que** la distance des arbres d'entraînement (6) voisins l'un par rapport à l'autre est plus grande que le diamètre de la révolution des dents (5) du rotor porte-outils (4) rotatif.

3. Herse rotative selon la revendication 1,
**caractérisée par le fait**
**que** l'alimentation en courant des moteurs électriques (7) est assurée par un générateur, qui est de préférence attribué au tracteur ou à la herse rotative (2).

4. Herse rotative selon la revendication 3,
**caractérisée par le fait**
**qu'**au moins un régulateur d'entraînement est commuté entre le générateur et les moteurs électriques (7), et que le régime du moteur est réglé par l'intermédiaire d'une commande de manière à ce que le régime du rotor porte-outils (4) corresponde aux consignes réglées, programmées ou bien reçues via un système de détermination numérique de la position, p. ex. un récepteur GPS.

5. Herse rotative selon la revendication 1,
**caractérisée par le fait**
**que** chaque moteur électrique (7) est constitué sous la forme d'un servomoteur, d'un moteur synchrone ou d'un moteur asynchrone, qui est réversible au niveau du sens de rotation et qui est alimenté avec une tension comprise entre 380 volts et 750 volts.

6. Herse rotative selon la revendication 1,
**caractérisée par le fait**
**que** chaque moteur électrique (7) est équipé d'une roue libre et/ou d'un dispositif d'inversion, qui est constitué de manière à pouvoir être activé lorsqu'est atteint un couple d'entraînement limite prescrit ou une consommation d'un niveau élevé en conséquence du moteur électrique (7) correspondant.

7. Herse rotative selon la revendication 1,
**caractérisée par le fait**
**qu'**entre chaque moteur électrique (7) et l'arbre d'entraînement (6) est prévu un engrenage (8), qui est constitué de manière à fournir une réduction ou une multiplication du régime du rotor porte-outils (4) en relation avec le régime du moteur électrique (7).

8. Herse rotative selon la revendication 1,
**caractérisée par le fait**
**qu'**au moins deux rotors porte-outils (4) pouvant être poussés, déplacés ou pivotés par un moteur électrique (7) sont disposés sur le cadre (3).

9. Herse rotative selon la revendication 1,
**caractérisée par le fait**
**qu'**au moins deux rotors porte-outils (4) peuvent être pivotés verticalement par l'intermédiaire d'un guidon et sont constitués de préférence menés parallèlement disposés sur le cadre (3) et réglables et leur profondeur de travail.

10. Herse rotative selon la revendication 1,
**caractérisée par le fait**
**que** les rotors porte-outils (4) sont, conformément aux exigences, disposés à différentes distances et dans différentes positions d'angles par rapport au sol.
